**Europäisches Patentamt**

**European Patent Office**

**Office européen des brevets**

(19)

(11) Publication number: **0 028 538**

**A1**

(12)

# EUROPEAN PATENT APPLICATION

(21) Application number: **80303950.2**

(22) Date of filing: **05.11.80**

(51) Int. Cl.³: **G 02 F 1/00**
**H 01 S 3/10**

(30) Priority: **05.11.79 US 91283**

(43) Date of publication of application:
**13.05.81 Bulletin 81/19**

(84) Designated Contracting States:
**DE FR GB**

(71) Applicant: **XEROX CORPORATION**
**Xerox Square - 020**
**Rochester New York 14644(US)**

(72) Inventor: **Lucero, John A.**
**144 W. Norgate**
**Glendora California 91740(US)**

(74) Representative: **Goode, Ian R. et al,**
**European Patent Attorney c/o Rank Xerox**
**Limited,Patent Dept. Rank Xerox House 338 Euston**
**Road**
**London NW1 3BH(GB)**

(54) Optical apparatus and method for minimizing refractive index damage therein.

(57) The damage (change) in refractive index of an optical material (8) by exposure to a laser beam (13) is minimized by uniformly illuminating the entire material concurrently with the operation of the material in a device configuration. The illumination can be generated by a coherent or incoherent source (17), the illumination containing wavelengths shorter than the wavelength of the laser beam.

FIG. 1

-1-

## OPTICAL APPARATUS AND METHOD FOR MINIMIZING REFRACTIVE INDEX DAMAGE THEREIN

The present invention relates to the field of acousto-optic and electro-optic devices.

Extensive references have previously been made regarding observed laser-induced refractive index changes in certain crystals. The index change distorts the wavefront and alters the polarization of the transmitted optical beam and therefore limits the application of these materials to nonlinear optical devices. This change, or damage, is usually referred to as laser damage although it differs from the catastrophic damage which occurs at much higher power densities in that the index change is reversible. Optical damage has been observed in several materials including $LiNbO_3$, $LiTaO_3$, KTN, $BaTiO_3$, $Sr_{1-x}Ba_xNb_2O_6$, and CdS. In the first two materials, laser damage has been induced with wavelengths of 633 nm or shorter. Index damage is generally more severe at shorter wavelengths.

In the case of $LiNbO_3$, it has been proposed that the damage is due to the drifting of photoexcited electrons out of the region of the illumination beam followed by a retrapping of the freed electrons near the beam periphery. The space-charge field between the positively ionized centers and the trapped electrons then causes the index change via the linear electro-optic effect.

Several techniques have been previously utilized, with limited success, to reduce or control the damage susceptibility of $LiNbO_3$ and $LiTaO_3$. These techniques have included field annealing, and/or special control of the $Fe^{3+}$ impurity ion state during crystal growth and the application of an externally applied DC field during operation in a device configuration. Regarding the latter technique, the fields required to produce a significant reduction in damage susceptibility are of the order of several kilovolts/cm. Another method of preventing optical damage in $LiTaO_3$ and $LiNbO_3$ is by operating the device bearing the susceptible crystal at an elevated temperature (approximately $170^{\circ}$C). The problem with the latter approach is that the device may not withstand the

-2-

required heating.

The prior art has also recognized that localized index damage can be erased by either heating the damaged crystal or by illuminating the damaged spot with a larger diameter beam of the same wavelength or by flooding the crystal with light generated by a metal discharge lamp.

Although uniform illumination has been utilized in the prior art to reduce damage (change) to the crystal refractive index, the illumination has been applied to the crystal after the damage has already occurred and the crystal is no longer being exposed to the incident optical beam. For obvious reasons, this procedure limits the use of the crystal in a device configuration.

The present invention provides a technique for minimizing the damage to (or the change in) the refractive index of an optical material when exposed to a laser beam and wherein an electric field is concurrently applied to the material. In particular, the entire material is uniformly illuminated concurrently with the operation of the material in a device configuration. The illumination can be generated by a coherent or incoherent source, the wavelength of the illumination preferably being shorter than the wavelength of the laser beam.

It is an object of the present invention to provide a method wherein a laser beam illuminated optical material can be utilized in a device configuration with damage to the refractive index of the material by the laser beam being minimized.

It is a further object of the present invention to provide a method which minimizes the damage to the refractive index of an optical material caused by a laser beam incident on the material, by concurrently illuminating the entire material with another source of illumination.

It is still a further object of the present invention to provide an optical modulator of deflector device comprised of a laser beam sensitive material wherein the damage caused to the refractive index of the material by the laser beam is minimized by concurrently illuminating the material with illumination generated by a coherent or incoherent source, the illumination generated thereby preferably having a wavelength shorter than the wavelength of the laser beam.

For a better understanding of the invention as well as other objects and further features thereof, reference is made to the following description which is to be read in conjunction with the following drawing wherein:

Figure 1 shows schematically and illustratively a modulator/deflector configuration in which the present invention may be utilized; and

Figure 2 shows a typical electrode pattern for use with the configuration of Figure 1.

The technique of the present invention is particularly adapted for use in reducing the laser-induced refractive index change in optical materials having an electric field applied thereacross, such as the electro-optic TIR modulators described in U.S. Patent No. 4,125,318.

Although the technique described herein is equally adaptable to device configurations utilizing acousto-optic materials, the following discussion will be directed to the TIR modulator described in the aforementioned patent for purposes of illustration.

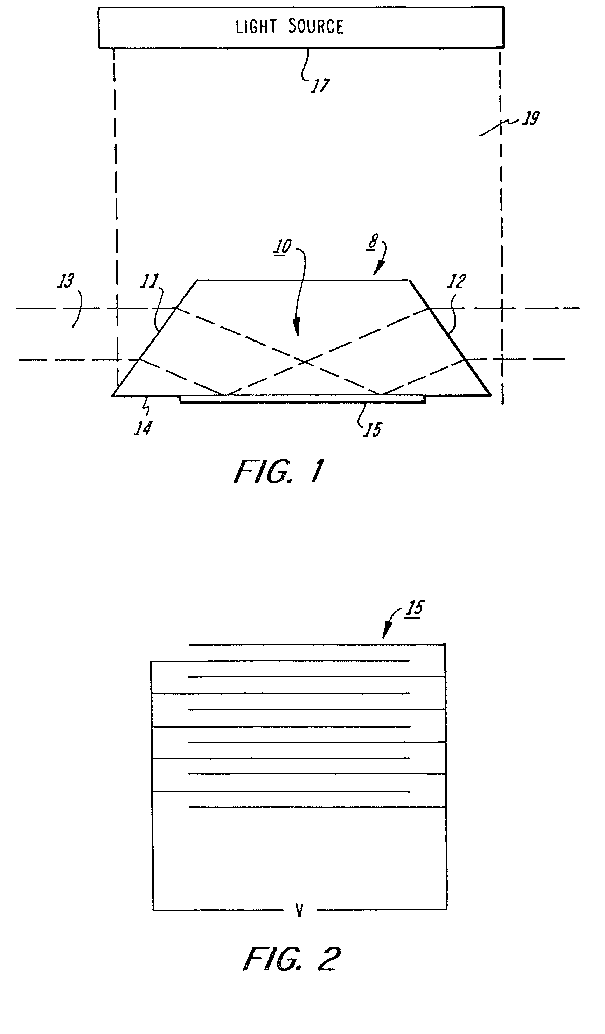

Referring to Figure 1, a prior art modulator 8 consists of electro-optic material formed of a $LiNbO_3$ xy cut crystal 10. The crystal 10 has three polished surfaces 11, 12 and 14. The angles of surfaces 11 and 12 are arranged such that a collimated beam of light 13 of single wavelength generated by a laser and parallel to the plane of the surface 14 is deflected at the surfaces 11 and 12 to incur total internal reflection at the surface 14. It will be appreciated that other than the shown crystal shapes are possible to achieve the total internal reflection. However, in the form shown a crystal with overall dimensions of about 4 x 4 x 15 mm provides satisfactory operation.

An electrode pattern 15 is deposited on the surface 14 in an array as shown in Figure 2 with the operative electrodes parallel to the incident light beam. A voltage V (Figure 2) is applied in use to the electrode pattern and induces an electric field adjacent the surface 14 which alters the refractive index of the crystal. With the pattern shown, the modulator 8 behaves in a similar manner to a phase diffraction grating to alter the light output beam.

The output beam is diffracted into a series of orders whose intensities vary with electrode voltage. For example, if a typical full modulation voltage V of 70 volts is applied to the electrodes, the output light beam contains no zero order energy, the energy being transferred to other orders of energy. Thus, if these orders are stopped by suitable obstacles, the incident or original beam direction can be seen to be modulated by the application of the voltage.

As a typical example, the electrodes are 12 um wide and 3.5 mm long, and the pitch between individual electrodes is 50 um. The modulator/deflectors of this kind are at least substantially insensitive to temperature variation because a phase-modulated technique is used which is virtually independent of temperature if temperature-independent electro-optic coefficients are used, for example $r_{22}$ in $LiNbO_3$. Suitable electro-optic crystal materials besides $LiNbO_3$ include $LiTaO_3$, BSN, ADP, KDP, $KD^XP$, KDA and $Ba_2NaNb_5O_{15}$.

As set forth hereinabove, the applied voltage V induces an electric field which alters the refractive index of the crystal to provide the operative characteristics of the device. However, beam 13 causes additional change in the crystal refractive index which should be compensated for to provide the optimum device configuration. In accordance with the teachings of the present invention, a source of substantially uniform flood illumination 17 is provided which projects light beam 19 in a manner to entirely illuminate crystal 10 concurrently with the operation of the crystal in a device configuration; i.e. with beam 13 incident on surface 11 of the crystal. Source 17 may be positioned as shown or in a manner such that light beam 19 is incident on modulator 8 from the bottom or either side. In these cases, light beam 19 is not in the path of laser beam 13.

This technique reduces the damage susceptibility by decreasing the probability of permanently trapping photoexcited electrons outside the region of the beam to be modulated, deflected, or otherwise manipulated and maintains the electrons within the conduction band and prohibits the occurrence of space-charge fields which can give rise to index changes caused by the incident laser beam.

In a specific example, crystal 10 comprises $LiNbO_3$ and the

laser beam 13 has a wavelength of 633 nm (generated by a helium-neon laser, not shown). As beam 13 exposes crystal 10 in a device configuration (modulator, deflector, etc.), crystal 10 is uniformly illuminated by the beam 19 generated by lamp 17, such as a projection lamp, or another laser, concurrently therewith. The laser–induced damage caused by the laser beam 13 incident on crystal 10 prior to energization of lamp 17 is substantially removed shortly after energization of lamp 17. The beam 19 is believed to remove the damage at a faster rate than produced by laser beam 13.

It should be noted that source 17 can either be an incoherent source, such as the above-noted projection lamp, or a coherent source such as a laser (appropriate optics being provided to expand the laser beam to fully illuminate modulator 8). The technique of the present invention has been found to be more efficient with the source 17 generating a light beam 19 having a wavelength shorter than beam 13. In the case of an incoherent source, all wavelengths contribute to reducing the optical damage but the shorter wavelength components are more efficient. In the above example, source 17 may be a helium-cadmium laser, such a laser generating a beam having a wavelength of 4416 nm. The degree of damage reduction has been observed to be dependent on the intensity and uniformity of the light beam 19. It is also believed that light beam polarization will also effect damage reduction.

-1-

CLAIMS:

1.    A method for minimizing refractive index damage in an optical material exposed to a laser beam comprising the steps of:

exposing an optical maerial to a laser beam having a first wavelength, applying an electric field across said optical material,

characterised by uniformly illuminating said optical material with a light beam concurrently with the exposure of said optical material to said laser beam.

2.    The method as defined in claim 1, characterised in that, said optical material is operated as a modulator.

3.    The method as defined in claim 1 or 2, characterised in that said optical material is a single crystal of $LiNbO_3$.

4.    The method as defined in claim 1 or 2, characterised in that said optical material is a single crystal of $LiTaO_3$.

5.    The method as defined in any preceding claim, characterised in that said uniform illumination is provided by a second source of coherent radiation.

6.    The method as defined in claim 5, characterised in that the wavelength of the illumination provided by the second source is less than said first wavelength.

7.    The method as defined in any of claims 1-4, characterised in that said uniform illumination is provided by a source of non-coherent radiation.

8    The method as defined in claim 7, characterised in that the non-coherent radiation includes wavelengths less than said first wavelength.

9.    The method as defined in any preceding claim, characterised in that the entire body of optical material is uniformly illuminated.

10. The method as defined in any preceding claim, characterised in that the electric field is provided by applying a voltage to an electrode pattern formed on one surface of said optical material.

11. The method as defined in any preceding claim, characterised in that the source of uniform illumination is not in the path of said laser beam.

12. Optical apparatus including a crystal (8) of optical material intended to be traversed by a beam (13) of coherent radiation, characterised by means (17) for flooding the crystal with uniform illumination in order to reduce or prevent refractive index damage in the crystal.

0028538

1 / 1 -

LIGHT SOURCE

FIG. 1

FIG. 2

European Patent
Office

**EUROPEAN SEARCH REPORT**

| | **DOCUMENTS CONSIDERED TO BE RELEVANT** | | | CLASSIFICATION OF THE APPLICATION (Int. Cl. 3) |
|---|---|---|---|---|
| Category | Citation of document with indication, where appropriate, of relevant passages | | Relevant to claim | |
| A | US - A - 3 940 201 (THOMSON-CSF ) + Figures 1,2 and 4, column 2, line 59- column 5, line 20; fig.7, column 6, line 63 - column 7, line 14 + -- | | 1,2, 6-12 | G 02 F 1/00 H 01 S 3/10 |
| A | DE - B - 1 764 407 (WESTERN ELEC-TRIC ) + Fig.1, column 4, line 2 - column 5, line 33 + -- | | 1,2,6-8,10,11 | |
| A | GB - A - 1 450 430 (RCA) + Fig.2, page 1, lines 34-58, 75 - page 2, line 93; fig. 4a, page 3, lines 12-30, 61-65 + -- | | 1,5,7, 9-12 | TECHNICAL FIELDS SEARCHED (Int.Cl. 3) G 02 F 1/00 H 01 S 3/10 |
| D,A | US - A - 4 125 318 (XEROX) + Fig.1 column 2, lines 6-25,43, 44, column 4, lines 60-63 + ---- | | 1-4,10, 12 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search VIENNA | Date of completion of the search 28-01-1981 | Examiner BENISCHKA | |

EPO Form 1503.1   06.78